(19) Europäisches Patentamt
European Patent Office
Office européen des brevets

(11) **EP 2 723 544 B1**

(12) **EUROPÄISCHE PATENTSCHRIFT**

(45) Veröffentlichungstag und Bekanntmachung des Hinweises auf die Patenterteilung:
**21.02.2018  Patentblatt 2018/08**

(51) Int Cl.:
**B28B 7/22** *(2006.01)*    **E04H 12/12** *(2006.01)*
**G01B 11/24** *(2006.01)*    **B28B 21/02** *(2006.01)*
**B28B 21/82** *(2006.01)*    **E04H 12/34** *(2006.01)*
**B28B 7/00** *(2006.01)*    **B28B 17/00** *(2006.01)*
**B28B 23/00** *(2006.01)*

(21) Anmeldenummer: **12727379.5**

(22) Anmeldetag: **14.06.2012**

(86) Internationale Anmeldenummer:
**PCT/EP2012/061333**

(87) Internationale Veröffentlichungsnummer:
**WO 2012/175406 (27.12.2012 Gazette 2012/52)**

(54) **TURMFERTIGUNG**

PRODUCTION OF A TOWER

PRODUCTION D'UNE TOUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.06.2011   DE 102011078016**

(43) Veröffentlichungstag der Anmeldung:
**30.04.2014   Patentblatt 2014/18**

(73) Patentinhaber: **Wobben Properties GmbH**
**26607 Aurich (DE)**

(72) Erfinder:
* **KAPITZA, Jan**
  **26629 Großefehn (DE)**
* **ALBERS, Karsten**
  **26759 Hinte (DE)**
* **HORN, Günther**
  **26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
DE-A1- 10 240 708    DE-A1- 19 801 330
US-A- 5 748 322    US-A1- 2010 278 418

* **RAUNO HEIKKILA ET AL: "DREIDIMENSIONALES MESS- UND PRUFSYSTEM FUR DIE PRODUKTION ARCHITEKTONISCHER BETONFERTIGTEILE. ÖTHREE-DIMENSIONAL CONTROL SYSTEM FOR PRECAST ARCHITECTURAL CONCRETE PRODUCTION", BFT INTERNATIONAL, BAUVERLAG, GUTERSLOH, DE, Bd. 60, Nr. 10, 1. Oktober 1994 (1994-10-01), Seiten 62-67, XP000474762, ISSN: 0373-4331**
* **AKINCI B ET AL: "A formalism for utilization of sensor systems and integrated project models for active construction quality control", AUTOMATION IN CONSTRUCTION, ELSEVIER SCIENCE PUBLISHERS, AMSTERDAM, NL, vol. 15, no. 2, 1 March 2006 (2006-03-01), pages 124-138, XP028001189, ISSN: 0926-5805, DOI: 10.1016/J.AUTCON.2005.01.008 [retrieved on 2006-03-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Fertigen eines Turmsegmentes eines Betonturms einer Windenergieanlage.

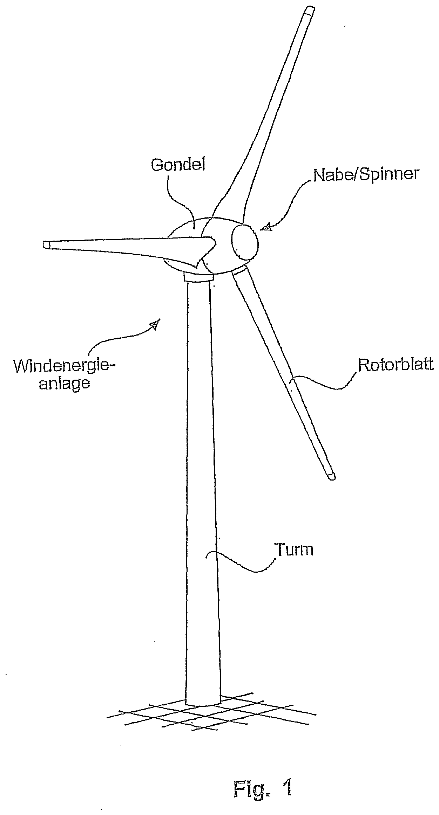

Windenergieanlagen, insbesondere solche mit horizontaler Rotorachse wie in Figur 1 gezeigt, erfreuen sich heutzutage zunehmender Beliebtheit.

Solche Windenergieanlagen weisen eine Gondel mit einem aerodynamischen Rotor auf. Diese Gondel mit Rotor kann je nach Anlagengröße eine Masse von weit über 100t haben. Die Gondel wird auf einem Turm getragen, der als Betonturm oder als Stahlturm ausgebildet sein kann und die Last der Gondel aufnehmen und in ein Fundament ableiten muss. Diese Last beinhaltet eine Gewichtslast durch die Gondel sowie eine Last aufgrund des Winddrucks auf dem Rotor im Betrieb der Windenergieanlage.

Betontürme von Windenergieanlagen, von denen die vorliegende Erfindung ausgeht, werden aus Turmsegmenten, nämlich Betonfertigteilen aus Stahlbeton aufgebaut. Damit unterscheiden sie sich grundlegend von Betontürmen, die aus sogenanntem Ortbeton also direkt vor Ort mittels einer Kletterschalung aufgebaut werden, wie das beispielsweise für Fernsehtürme üblich ist. An einen Betonturm einer Windenergieanlage werden auch insoweit andere Anforderungen als an einen anderen Betonturm gestellt. Eine der speziellen Anforderungen ist auch die bereits oben beschriebene Windbelastung auf den Rotor, damit auf die Gondel und damit auf den Turmkopf.

Gemäß einer Form einer Windenergieanlage läuft der Turm von unten von seinem Fundament aus nach oben zu seinem Turmkopf hin konisch zu. Die hierzu übereinanderzusetzenden Turmsegmente sind an Ansatzstellen entsprechend aufeinander anzupassen. Dies betrifft insbesondere Form und Durchmesser der betreffenden Segmente in dem Bereich, in dem sie aufeinander gesetzt werden. Ist eine Abweichung zweier aufeinanderzusetzender Segmente hier zu groß, kann der betreffende Betonturm nicht mehr mit ausreichender Fertigungsgüte hergestellt werden. Wenigstens eines der zusammenzusetzenden Turmsegmente ist dann als Ausschuss auszusortieren und durch ein geeignetes Segment mit besseren, insbesondere genauer eingehaltenen Abmessungen zu ersetzen. Wenigstens eine zur Herstellung des Ausschuss-Turmsegmentes verwendete Schalung muss entsprechend geändert oder ausgetauscht werden. Das Aussortieren eines solchen Ausschuss-Turmsegmentes sowie gegebenenfalls das Ersetzen einer verwendeten Schalung verursacht unnötige Kosten und kann zu einer Zeitverzögerung beim Aufbau einer Windenergieanlage führen.

Ein konisch zulaufender Windenergieanlagenturm, der aus einer Vielzahl von Turmsegmenten, nämlich Fertigbetonteilen zusammengesetzt ist, benötigt eine entsprechend große Anzahl unterschiedlicher Turmsegmente. Für diese unterschiedlichen Turmsegmente werden entsprechend viele Schalungen, also Formen zum Gießen des jeweiligen konkreten Turmsegmentes benötigt. Werden Windenergieanlagen unterschiedlicher Größe hergestellt, werden entsprechend unterschiedlich große Betontürme benötigt und entsprechend steigt die Anzahl nötiger Turmsegmente und nötiger Verschalungen. insbesondere mit größer werdenden Türmen und einer größer werdenden Anzahl unterschiedlicher Türme steigt die Anzahl unterschiedlicher Turmsegmente und benötigter Verschalungen entsprechend stark an und kann in dem betreffenden Unternehmen zum Fertigen der Turmsegmente zu einem logistischen und/oder organisatorischen Problem werden. Zumindest steigt der Aufwand für Logistik und Organisation erheblich an.

Zum Herstellen von Betonturmteilen, also Betonsegmenten nämlich Fertigbetonteilen, werden Betonschalungen eingesetzt, die einen Hohlraum bilden, in den der Beton eingegossen wird. Darin wird auch eine entsprechende Bewehrung vorgesehen, und nach dem Aushärten des Betons wird dieser von der Verschalung gelöst und dann entsprechend weiterverarbeitet. Zum Herstellen von kegelstumpfmantelförmigen Turmsegmenten oder entsprechenden Teilsegmenten können eine innere und eine äußere Schalung verwendet werden. Entsprechend wird eine innere und eine äußere Schalung benötig. Nach dem Aushärten kann die äußere Schalung, die 5t bis 10t wiegen kann, mittels eines Krans weggehoben, so dass das ausgehärtete Betonfertigteil zugänglich ist und seinerseits zur Weiterverarbeitung mittels eines Krans transportiert werden kann. Diese Arbeit ist aufwendig und benötigt einen hohen Einsatzgrad an entsprechend schweren Maschinen, was wiederum den Herstellungsaufwand erhöht und die Herstellung verteuert.

Dabei sind schließlich die Turmsegmente mittels eines Tiefladers vom Herstellungswerk, das die Turmsegmente als Fertigbauteile hergestellt hat, zu dem jeweiligen Aufstellungsort einer Windenergieanlage zu transportieren, damit dort mittels dieser Turmsegmente ein Betonturm einer Windenergieanlage errichtet werden kann.

Da solche Segmente im Wesentlichen die Form eines Kegelstumpfmantels oder eines Segmentes eines Kegelstumpfmantels aufweisen, bereiten diese besondere Probleme beim Transport auf einem solchen Tieflader. Dabei sind die Betonfertigteile üblicherweise im Stehen zu transportieren, weil hierdurch der geringste Platz beim Transport benötigt wird. Betonsegmente werden mitunter so groß wie möglich hergestellt, aber doch so klein, dass diese noch auf der Straße transportiert werden können. Dabei werden meist zulässige Übergrößen zugrunde gelegt. Es ist eine besondere Herausforderung, ein solches großes Turmsegment, oder mehrere davon, sicher mittels eines Tiefladers auf der Straße zu transportieren. Werden diese versehentlich nicht ausreichend straff verzurrt, besteht die Gefahr, dass diese in einer Kurve von dem Tieflader kippen oder bei einer Bremsung unerwünscht verrutschen. Dies kann insbesondere bei einer Verzurrung erfolgen, die sich aufgrund der Rundungen des jeweiligen Turmsegmentes durch leichtes Verrutschen lockern kann.

Die deutsche Offenlegungsschrift DE 102 40 708 A1 betrifft ein Verfahren zur Herstellung eines Betonkörpers, der mittels einer Betonform hergestellt wird, wobei selbstverdichtender Beton von unten in die Betonform gedrückt wird. Der Artikel Rauno Heikkila et al. "Dreidimensionales Mess- und Prüfsystem für die Produktion architektonischer Betonfertigteile. Three-dimensional control system for precast architectural concrete production", BFT International, Bauverlag Gütersloh, DE, Bd. 60, Nr. 10, 1. Oktober 1994 (1994-10-01), Seiten 62,67, XP000474762, ISSN: 0373-4331, betrifft ein dreidimensionales Mess- und Prüfsystem für die Produktion architektonischer Betonfertigteile, wobei ein automatisches Messsystem beschrieben wird.

Der vorliegenden Erfindung liegt somit die Aufgabe zugrunde, wenigstens eines der oben genannten Probleme zu adressieren, insbesondere Fertigung und Transport von Turmsegmenten von Betontürmen von Windenergieanlagen zu Verbessern. Insbesondere soll eine genauere Fertigung und/oder eine Vereinfachung der Herstellung von Turmsegmenten und/oder eine Verbesserung der Herstellung unterschiedlicher Betontürme für Windenergieanlagen und/oder der Transport von Turmsegmenten von Betontürmen von Windenergieanlagen verbessert werden. Zumindest soll eine alternative Lösung vorgeschlagen werden.

Erfindungsgemäß wird ein Verfahren zum Fertigen eines Turmsegmentes eines Betonturmes einer Windenergieanlage gemäß Anspruch 1 vorgeschlagen. Demnach wird eine Schalung, die eine Segmentform bildet, mit Beton gefüllt. Wenn der Beton ausgehärtet ist, weist er die durch die Segmentform vorgegebene Form auf und bildet somit das Turmsegment. Die Segmentform kann beispielsweise im Wesentlichen aus zwei Schalungen bestehen, die so zueinander angeordnet werden, dass dazwischen ein Raum zum Ausfüllen mit Beton und zum Vorgeben der Form des zu fertigenden Turmsegmentes bildet. Nachdem der Beton zu einem Turmsegment ausgehärtet ist, wird das Turmsegment vermessen, um ein dreidimensionales virtuelles Ist-Modell des Turmsegmentes zu erstellen. In diesem Zusammenhang ist unter einem ausgehärteten Turmsegment ein solches zu verstehen, dass so hart ist, bei dem also der Beton soweit abgebunden ist, dass das Turmsegment seine Form behält und weiterverarbeitet werden kann. In diesem Moment ist es noch nicht erforderlich, dass das Turmsegment bereits seine Endfestigkeit erreicht hat, die beim Einbau in einem Betonturm benötigt wird.

Das Turmsegment wird so vermessen, dass ein dreidimensionales Ist-Modell angefertigt werden kann, und ein solches Ist-Modell wird dann angefertigt, nämlich als virtuelles Modell. Wird beispielsweise - um einen einfachen Fall zur Erläuterung zu verwenden - ein Turmsegment hergestellt, das einen Kegelstumpfmantel ausweisen soll, so können wenige Messwerte bereits ausreichen, um ein Modell eines Kegelstumpfmantels mit den konkreten Abmessungen des Turmsegmentes zu erstellen. Rein theoretisch reicht für die zahlenmäßige Bestimmung und Modellierung eines kreisförmigen Außenrandes wie beispielsweise eines oberen äußeren Randes des Turmsegmentes die Aufnahme von drei Messpunkten aus. In einem solchen Fall können allerdings Abweichungen von einem Kreis nicht bestimmt werden. Sollen Abweichungen wie beispielsweise eine Deformation eines Kreises hin zu einer elliptischen Form für diesen beispielhaft genannten oberen äußeren Rand bestimmt werden, so sind weitere Messpunkte notwendig. Andere Bereiche des vermessenen Turmsegmentes können bei der Modellbildung - unter Verwendung weiterer Messpunkte - beispielsweise über einen linearen Zusammenhang erfasst werden.

Grundsätzlich ist eine Überbestimmung des Objektes durch Aufnahme von mehr, insbesondere deutlich mehr Messpunkten als theoretisch notwendig vorzuschlagen. Hierbei kann das Problem auftreten, dass die grundsätzlich zugrunde gelegte Form - wie beispielsweise eine elliptische Form - nach ihrer konkreten Modellierung nicht jeden Messpunkt enthält. Dennoch kann eine Modellierung vorgenommen werden, wenn beispielsweise für die Berechnung des modellierten Abschnitts aus den Messpunkten das Verfahren der kleinsten Fehlerquadrate angewendet wird.

Ebenso kann das virtuelle Modell aus finiten Elementen zusammengesetzt sein. Dies kann unter anderem von den zugrunde gelegten Voraussetzungen abhängen, insbesondere ob von der Einhaltung gewisser Grundformen ausgegangen wird oder ob diesbezüglich bei der Modellbildung noch keine Festlegung vorgenommen werden soll.

Unter einem virtuellen Modell ist hier zu verstehen, dass das Modell nicht physisch vorhanden ist, sondern als Modell in einer Datenverarbeitungsvorrichtung insbesondere einem Prozessrechner vorliegt. In gleicher Art und Weise liegt ein Referenzmodell zugrunde, mit dem hinsichtlich geometrischer Abmessungen das von dem Turmsegment erstellte virtuelle Ist-Modell verglichen wird, um geometrische Abweichungen quantitativ und qualitativ zu bestimmen. Unter dem Ist-Modell ist hier das Modell des vermessenen Turmsegmentes zu verstehen. Kleine Abweichungen zwischen Ist-Modell und ausgemessenem Turmsegment sind nicht zu vermeiden.

Nach dem Vergleichen des dreidimensionalen Ist-Modells mit einer vorgegebenen Form wie dem virtuellen Soll-Modell, werden die erfassten Abweichungen ausgewertet. Hierbei werden insbesondere abschnittsweise die jeweils größten Abweichungen betrachtet, wie beispielsweise die größte Abweichung der Höhe des ausgemessenen gegenüber dem vorgegebenen Segment, die größte Abweichung des Durchmessers einer bestimmungsgemäß waagerechten Außenkontur des Ist-Modells zum Soll-Modell, die größte Abweichung einer Wandstärke des Ist-Modells von der des Soll-Modells und die größte Abweichung einer nicht-kreisförmige Außenkontur des Ist-Modells von einer durch dass Soll-Modell vorgegebenen kreisförmigen Außenkontur. Dies sind nur Beispiele von Abweichungen. Es können auch andere Abweichungen als die jeweils größte Abweichung verwendet werden, wie beispielsweise eine mittlere Abweichung. Diese wenigstens eine Abweichung wird dann mit einem vorgegebenen ersten Grenzwert verglichen. Dieser Grenzwert ist entsprechend abhängig von den zulässigen Toleranzen und auch abhängig davon vorgegeben, ob jeweils ein maximaler Abweichungswert, ein durchschnittlicher Abweichungswert oder ein anderer Abweichungswert für den Vergleich zugrunde gelegt wird. Ist dieser Grenzwert überschritten, ist die verwendete Form, insbesondere eine verwendete Schalung entsprechend anzupassen. Das Anpassen kann beispielsweise durch Auftragen oder Abtragen von Material an der Schalung erfolgen, oder durch Verformen der Schalung. Im äußersten Fall kommt das Ersetzen der betreffenden Schalung in Betracht.

Vorzugsweise wird das Vermessen des jeweiligen Turmsegmentes durch ein Lasermessgerät vorgenommen. Ein solches Lasermessgerät kann eine Vielzahl von Messpunkten auch dreidimensional bestimmen und ist vorzugsweise dazu vorbereitet, die aufgenommenen Messwerte in ein Datenverarbeitungssystem einzugeben bzw. diesen bereitzustellen, damit das Ist-Modell berechnet und der beschriebene Vergleich vorgenommen werden kann.

Vorzugsweise erfolgt die Vermessung des Turmsegmentes mit einer Genauigkeit von 5 mm oder höher, insbesondere 2 mm oder höher und weiter bevorzugt 1 mm oder höher. Der erste vorbestimmte Grenzwert beträgt vorzugsweise 10 mm oder weniger, insbesondere 5 mm oder weniger und weiter bevorzugt 2 mm oder weniger.

Durch das vorgeschlagene Verfahren wird für ein Betonsegment somit eine Genauigkeit im Millimeter-Bereich erreicht. Dabei ist zu beachten, dass solche Turmsegmente regelmäßig eine Außenabmessung, also eine Breite, von 5 m ausweisen können. Werden - bezogen auf eine Draufsicht - Teilkreissegmente hergestellt, wie beispielsweise Halbkreissegmente oder Viertelkreissegmente, so können diese eine noch größere Längsrichtung ausweisen - bezogen auf einen bevorzugten Transport auf der Straße - und entsprechend für noch größere Turmdurchmesser vorgesehen sein. Dennoch wird eine Genauigkeit im Millimeterbereich vorgeschlagen, was über übliche Genauigkeiten bei der vorgenannten Größenordnung für Beton-Elemente hinausgeht.

Gemäß einer Ausführungsform wird vorgeschlagen, dass als erster vorbestimmter Grenzwert eine maximale Abweichung eines horizontalen Schnitts des Ist-Modells, bezogen auf die bestimmungsgemäße Ausrichtung des Turmsegmentes, von einem Kreis bzw. Kreissegment vorgegeben wird. Die zu fertigenden Turmsegmente sind dazu vorgesehen, beim Aufbau eines Betonturms einer Windenergieanlage übereinander angeordnet zu werden. Daher ist eine sehr hohe Passgenauigkeit der unmittelbar übereinander angeordneten Turmsegmente, nämlich der aufeinander gesetzten Turmsegmente, einzuhalten, um die Stabilität des herzustellenden Turmes zu gewährleisten. Diese Abweichungen beziehen sich auf einen horizontalen Schnitt, also einen Schnitt quer zur vertikalen Achse des Betonturms. Sie machen sich insbesondere beim Aufeinandersetzen von Turmsegmenten bemerkbar machen und sind daher möglichst genau einzuhalten.

Eine weitere Ausgestaltung sieht vor, dass das hergestellte und vermessene Turmsegment als Ausschuss behandelt wird, wenn die Abweichung zwischen virtuellem Ist-Modell und der vorgegebenen Form, insbesondere also dem virtuellem Soll-Modell, einen zweiten vorbestimmten Grenzwert überschreitet, der größer ist als der erste vorbestimmte Grenzwert. Es wird somit die Überwachung zweier Grenzwerte vorgeschlagen, und eine Überschreitung des ersten nur zu einer Nachbesserung der Betonform - insbesondere der Schalung - führt, wohingegen eine zu starke Abweichung, die über dem zweiten Grenzwert liegt, auch zu einem Ausschussteil führt. Wird also der erste Grenzwert überschritten, der zweite jedoch nicht, wird davon ausgegangen, dass das hergestellte Turmsegment noch innerhalb akzeptabler Grenzen liegt. Die Abweichungen sind nur so groß, dass eine Anpassung der Betonform, insbesondere der Schalung, eine Verbesserung des nächsten herzustellenden Turmsegmentes beabsichtigt. Durch die Überwachung des ersten Grenzwertes wird also kontinuierlich eine Überwachung und Verbesserung der Güte des hergestellten Turmsegmentes und damit des herzustellenden Turms insgesamt angestrebt. Entsprechend kann der erste Grenzwert sehr klein gewählt werden.

Erst die Überschreitung des zweiten Grenzwertes - die möglichst selten vorkommen sollte - führt zu einem Ausschuss und damit dem Bedarf ein neues, verbessertes Turmsegment zum Ersatz des soeben aussortierten Turmsegmentes herzustellen.

Vorzugsweise ist das Verfahren so ausgestaltet, dass abhängig von der bestimmten Abweichung ein Korrekturwert zur Änderung der Segmentform bzw. zur Änderung wenigstens einer die Segmentform bildenden Schalungen berechnet wird. Durch den Vergleich des virtuellen Ist-Modells mit dem virtuellen Soll-Modell lässt sich eine qualitative und quantitative Abweichung erkennen. Entsprechend sind die Abweichungen nach Qualität, Quantität und Ort des Ist-Modells vom Soll-Modell sehr gut bekannt. Hieraus lassen sich entsprechend die notwendigen Änderungen der Schalung berechnen, da diese im Wesentlichen eine Negativform des hergestellten und vermessenen Turmsegmentes darstellt.

Es wird zudem eine Vorrichtung zum Vermessen eines Turmsegmentes vorgeschlagen. Demnach ist ein Messgerät zum Vermessen geometrischer Abmessungen des Turmsegmentes vorgesehen, insbesondere ein Lasermessgerät. Weiterhin ist eine Datenverarbeitungseinrichtung vorgesehen, insbesondere ein Computer, die dazu vorbereitet ist, aus von dem Messgerät aufgenommenen geometrischen Daten ein virtuelles Modell zu erstellen und einen Vergleich des virtuellen Modells mit einer vorgegebenen Form durchzuführen, insbesondere einen Vergleich mit einem bereits bestehenden virtuellen Modell, also einen Vergleich von Ist-Modell mit Soll-Modell.

Vorzugsweise ist die Messvorrichtung zum Ausführen eines oben beschriebenen Verfahrens vorbereitet. Insoweit für das Verfahren weitere Vorrichtungselemente wie eine Betonform bzw. Schalung und/oder eine Vorrichtung zum Ändern einer solchen Betonform oder Schalung notwendig sind, bilden diese jeweils einen Teil der Messvorrichtung, die insoweit auch als Optimierungsvorrichtung oder Herstellvorrichtung für ein Turmsegment bezeichnet werden kann. Vorzugsweise weist die Messvorrichtung Befestigungsmittel auf, mit denen diese an einem Turmsegment und/oder einer Schalung befestigt werden kann, um eben dieses Turmsegment bzw. ein damit hergestelltes Turmsegment zu vermessen.

Die beschriebene Vermessung mit nachfolgendem Vergleich der genannten Modelle betrifft somit insbesondere eine Endkontrolle, bei der fertige Betonsegmente mit einem Lasermessverfahren und entsprechender Lasermessvorrichtung nach der Fertigstellung überprüft werden. Insbesondere geht es darum zu überprüfen, ob die Kontur zutreffend ist, insbesondere ob die Segmente tatsächlich rund sind. Hierbei wird das fertige Segment mittels des Lasermesssystems abgetastet und daraus ein dreidimensionales Abbild im Rechner geschaffen, das mit einem 3-D-Modell, also der Idealform, verglichen wird. Hierbei geht es darum, leichte Abweichungen zu erkennen und gegebenenfalls die Schalung entsprechend anzupassen. So kann beispielsweise eine leichte Abweichung vom Optimum erkannt werden, woraufhin eine Anpassung der Schalung erfolgt, ohne dass aber das vermessene Segment als Ausschuss bezeichnet werden müsste. Vielmehr wird so schon im Vorfeld eine Nachjustierung vorgeschlagen, um eine Optimierung der Herstellung zu erreichen. Hierbei werden Genauigkeiten im Millimeterbereich angestrebt und auch erreicht, was für den Maschinenbau, also metallverarbeitenden Betrieb, bei Größenordnungen der fertigenden Gegenstände üblich sein könnte, nicht jedoch bei der allgemeinen Betonherstellung solcher Größenordnungen.

Schließlich wird durch die vorgeschlagene Lösung auch eine Reproduzierbarkeit der hergestellten Betonsegmente erreicht. Neben einer generellen Qualitätsverbesserung ermöglicht dies auch die Austauschbarkeit von Elementen, die im Grunde identisch sein sollten, aufgrund von Herstellungsschwankungen aber nicht ganz gleich sind. Durch eine Verbesserung der Reproduzierbarkeit können solche Elemente gegeneinander ausgetauscht werden. Dies kann z.B. bei der Lagerhaltung von Vorteil sein, weil nicht mehr jedes einzelne Segment identifiziert werden muss, sondern nur Segmenttypen, einschließlich deren Größe.

Es wird zudem eine Schalung zum Fertigen eines Turmsegmentes eines Betonturmes einer Windenergieanlage vorgeschlagen. Eine solche Schalung geht aus von einem Turmsegment mit einer inneren konkaven und einer äußeren konvexen Oberfläche, wie das bei einem Zylinderschalensegment oder einem Schalensegment eines Kegelstumpfs der Fall ist. Für die innere konkave Oberfläche, die bestimmungsgemäß auch zum Inneren des zu fertigenden Betonturms weist, ist zum Formgeben ein Innenverschalungselement vorgesehen. Dies kann beispielsweise ein Zylinder oder ein Kegelstumpf oder ähnliches sein. Für die äußere konvexe Oberfläche, die im Wesentlichen auch einen Teil der äußeren Oberfläche des herzustellenden Betonturmes bilden soll, ist ein entsprechendes Außenverschalungselement vorgesehen. Das Innenverschalungselement kann auch als innere Schalung oder inneres Schalungselement bezeichnet werden, und das Außenverschalungselement kann als äußeres Schalungselement oder äußere Schalung bezeichnet werden.

Beide Verschalungselemente sind dazu vorbereitet, so zusammengestellt zu werden, dass sich zwischen ihnen ein Aufnahmeraum bildet zum Aufnehmen einer Betonmasse zum Gießen des herzustellenden Turmsegmentes. Die beiden Schalungselemente werden also so zusammengestellt, dass sich ein Ringspalt oder dergleichen ergibt oder ein Teil davon.

Die äußere Schalung, also das Außenverschalungselement weist eine Verfahrvorrichtung auf, insbesondere mehrere Räder, um die äußere Schalung nach einem Aushärten des Turmsegmentes in horizontaler Richtung von dem Turmsegment zu entfernen, insbesondere wegzuziehen, um das fertiggestellte Turmsegment freizugeben.

Nach dem Entfernen der äußeren Schalung auf diese Art und Weise ist das gerade hergestellte Turmsegment somit im Wesentlichen von einer Seite frei und liegt mit seiner anderen, der konkaven Seite, noch an der inneren Schalung an. Dennoch kann dieses Turmsegment nun beispielsweise mit einem Hallenkran aus seiner Position entnommen und zur Weiterverarbeitung bzw. Weitertransport gebracht werden.

Bisher war es bekannt, auch die Schalung mittels eines Hallenkrans zu heben, häufig mittels desselben Hallenkrans, mit dem das Betonsegment gehoben wird. Dem liegt der Gedanke zugrunde, dass die Schalung oftmals ein ähnliches Gewicht aufweist wie das gefertigte Turmsegment. Die Schalung kann ein Gewicht von 5t bis 10t aufweisen. Ein solches schweres Objekt ist manuell kaum zu handhaben, und aus diesem Grunde wurden und werden Hallenkräne eingesetzt, die solche Gewichte bewältigen können. Es wurde nun aber erkannt, dass ein manuelle Handhabung teilweise doch möglich ist, zumindest aber eine Handhabung ohne den Hallenkran auskommen kann. Hierdurch kann die Handhabung vereinfacht und die Nutzungszeit für den Hallenkran verringert werden.

Es wurde erkannt, dass die Außenschalung zwar ein hohes Gewicht aufweist, dafür aber nur eine kurze Strecke verschoben zu werden braucht. Es kommt hinzu, dass Hallenböden in industriellen Fertigungshallen oftmals plan und waagerecht sind. Somit konzentriert sich das Problem des Verschiebens einer schweren Schalung auf eine Überwindung der Reibungskraft beim waagerechten Bewegen der Schalung. Deshalb ist eine Verfahrvorrichtung vorgesehen, die etwaige Reibungskräfte verringern soll. Insbesondere soll dies durch Räder bzw. Rollen erreicht werden.

Vorzugsweise weist die Verfahrvorrichtung Räder oder Rollen zum Verfahren des Außenverschalungselementes, also der äußeren Schalung auf Schienen auf. Da die Schalung beim Entfernen vom gefertigten Turmsegment lediglich dieses freigeben soll und anschließend wieder in ihre formbildende Position zurückgeschoben werden soll, ist das Verfahren auf Schienen vorteilhaft, weil diese die Richtung vorgeben und kein weiterer Freiheitsgrad für die Bewegung der Schalung benötigt wird. Beim Zurückschieben der äußeren Schalung in ihre Anfangsposition zum Fertigen eines weiteren Turmsegmentes erreichen die Schienen, dass die Schalung sehr genau ihren vorgesehenen Platz erreicht. Dies ist zudem gegenüber der Verwendung eines Hallenkrans auch wesentlich einfacher, da eine komplizierte Positionierung nicht erforderlich ist.

Vorzugsweise wird ein Hebelmittel vorgeschlagen, das zum Ziehen oder Schieben der Außenverschalung vorgesehen ist, um dabei insbesondere auch die Außenverschalung von dem ausgehärteten Turmsegment zu lösen. Hierdurch kann eine Adhäsionskraft, die zwischen dem frisch ausgehärteten Turmsegment und der äußeren Schalung wirkt, überwunden werden. Hierfür braucht die äußere Schalung nur um einen sehr geringen Abstand bewegt zu werden, und es ist daher möglich, eine sehr große Hebewirkung vorzusehen. Die äußere Schalung kann hierdurch von dem gefertigten Turmsegment weggezogen werden und gegebenenfalls kann ein solcher Hebel neu angesetzt werden, um die äußere Schalung weiterzuziehen. Vorzugsweise ist unmittelbar neben dem wegzuziehenden Außenverschalungselement ein Angriffspunkt im Hallenboden oder in einem Fertigungsboden eingelassen, an dem ein solcher Hebel angesetzt werden kann, oder es ist eine Hilfsstütze wie bspw. eine Unterlage vorgesehen, die auf dem Hallenboden liegt und sich selbst gegen einen Gegenstand abstützt, wie z.B. ein Sockel, auf dem das Turmsegment gegossen wird, der als Fertigungsboden bezeichnet werden kann. Wobei die Hilfsstütze einen Ansatzpunkt, insbesondere eine Ansatzausnehmung und/oder Ansatzvorsprung zum Ansetzen des Hebels aufweist. Dabei kann ein Hebel im gestalterischen Sinne verstanden werden, nämlich eine lange Metallstange oder Stahlrohr. Diese kann an dem Ansatzpunkt, wie z.B. in der Ansatzausnehmung angesetzt und kurz darüber im unteren Bereich an der äußeren Schalung befestigt werden. Über das andere Ende dieses Hebels - also dieser Stange oder dieses Stahlrohrs - ist nun eine große Kraftübertragung möglich. Das Hebelverhältnis dieses Beispiels hängt von dem Verhältnis der Gesamtlänge des Hebels zum Abstand des Ansatzpunktes im Hallenboden zum Ansatzpunkt an der äußeren Schalung ab, sowie von einem Kippwinkel.

Vorzugsweise ist ein Hubmittel vorgesehen, um die äußere Schalung bzw. das Außenverschalungselement nach dem Aushärten des Turmsegmentes anzuheben, so dass das Außenverschalungselement so angehoben werden kann, dass es nur noch auf der Fahrvorrichtung lastet. Um ein Herauslaufen des flüssigen Betons beim Einfüllen und vor dem Aushärten zu gewährleisten, sollte die bewegliche äußere Schalung während des Herstellungsprozesses fest auf einem Untergrund lasten, nämlich so fest und abdichtend, dass kein Beton entweichen kann. Um eine so fest aufgesetzte äußere Schalung lösen zu können, sind die beschriebenen Hubmittel vorgesehen.

Vorzugsweise ist ein Trennmittel vorgesehen zum Trennen des Außenverschalungselementes von dem Turmsegment, mit einem Druckmittel, insbesondere einer Druckschraube zum Ausüben eines Trenndruckes zum Lösen des Außenverschalungselementes von dem Turmsegment. Ein solches Trennmittel ist fest an dem Außenverschalungselement befestigt und kann mittels des Druckmittels einen Druck gegen ein Widerelement wie ein anderes Außenverschalungselement derselben Betonform oder einen anderen Gegenstand ausüben, oder umgekehrt ist das Trennmittel an dem Widerelement angeordnet und drückt zum Trennen gegen das Außenverschalungselement und drückt diese dadurch von dem Turmsegment weg.

Vorzugsweise ist die Schalung dazu vorbereitet, die Hubbewegung des Hubmittels durch eine Schraubbewegung, insbesondere mittels eines Druckluftschraubers, auszulösen. Durch die Schraubbewegung lässt sich eine gute Kraftübertragung erreichen, wobei dabei auch eine Selbsthemmung der Hubvorrichtung erreicht werden kann. Vorzugsweise ist eine Betätigung mittels Druckluftschraubers vorgesehen. Das bedeutet, dass die Hubvorrichtung eine entsprechende Angriffsstelle für einen solchen Druckluftschrauber aufweist, insbesondere dass sie zum Betätigen einen gängigen Schraubenkopf aufweist, beispielsweise ein Sechskantschraubenkopf mit einer der Größen von 16 bis 32 mm. Zudem ist die Hubvorrichtung vorzugsweise auf eine übliche Drehzahl und ein übliches Drehmoment eines Druckluftschraubers ausgelegt.

Hier liegt der Gedanke zugrunde, dass das Betätigen der Hubvorrichtung, um die schwere äußere Schalung zu heben, für eine manuelle Betätigung sehr zeit-und kraftaufwendig sein kann. Durch die Anpassung an einen Druckluftschrauber kann ein solcher, der oftmals in Fertigungshallen vorhanden ist, in vorteilhafter Weise auch zum Betätigen der Hubvorrichtung verwendet werden. Der notwendige zusätzliche Aufwand ist somit gering. Das Hubmittel ist dabei, wenn die Verfahrvorrichtung mehrere verteilt angeordnete Räder oder Rollen aufweist, so verteilt, dass für jede Rolle, jedes Rad bzw. jedes Rollenpaar oder jedes Radpaar bzw. jede Rollengruppe oder jede Radgruppe ein Hubmittel vorgesehen ist. Beispielsweise können drei Räder über die äußere Schalung verteilt sein, um diese auf drei Schienen zu verfahren, wobei drei Hubmittel, nämlich bei jeden Rad eines, vorgesehen sind. Ist die äußere Schalung zunächst auf dem Hallenboden bzw. einem Fertigungsboden zum Fertigen des Turmsegmentes abgesetzt, kann diese mittels Betätigung der drei Hubmittel angehoben werden, so dass sie nur auf den besagten drei Rollen lastet und über die besagten drei Schienen verhältnismäßig einfach verschoben werden kann. Auch das Trennmittel ist bevorzugt dazu vorbereitet, durch einen Druckluftschrauber betätigt zu werden. Das Trennmittel, insbesondere die Druckschraube, ist dazu in entsprechender Weise vorbereitet, wie das Hubmittel.

Gemäß einer Ausführungsform wird eine Fertigungsvorrichtung vorgeschlagen, die Fahrschienen zum Führen der Verfahrvorrichtung des oben beschriebenen Außenverschalungselementes aufweist, das auch als äußere Schalung bezeichnet werden kann. Vorzugsweise sind die Fahrschienen an einem Boden, insbesondere einem Hallenboden angeordnet. An dem Boden ist zudem ein Hebelansatz. Insbesondere eine Ausnehmung zum Ansetzen eines bzw. des Hebels vorgesehen, um die äußere Schalung wenigstens teilweise von dem ausgehärteten Turmsegment abzuziehen. Somit betrifft eine solche Fertigungsvorrichtung eine Fertigungshalle oder einen Teil davon, in der eine erfindungsgemäße äußere Schalung vorgesehen ist. Die Fertigungshalle ist insbesondere hinsichtlich Schienen und Ansatzpunkt auf die zuvor beschriebene verfahrbare äußere Schalung angepasst.

Somit überwindet die vorgeschlagene Schalung Probleme einer bisherigen Herstellung von Betonsegmenten, bei der bisher äußere Schalungselemente, insbesondere konische Halbschalen, die die beschriebene äußere Schalung bilden, per Kran in ihre Position gebracht wurden. Nun wird vorgeschlagen, solche Schalungen - dies können Halbschalen, Drittelschalen, Viertelschalen und dergleichen betreffen - verfahrbar sind, nämlich insbesondere auf einem Schienensystem gelagert werden, um sie in die Position zur Herstellung eines Betonsegmentes hinzuschieben bzw. nach Aushärtung desselben wieder wegzuschieben oder wegzuziehen. Vorzugsweise sind Trennmittel vorgesehen, die zwei Halbschalen von einander wegdrücken und dadurch ein erstes Lösen einer solchen Halbschale oder dergleichen, insbesondere einer äußeren Schalung von dem ausgehärteten Turmsegment erreichen. Ein solches Trennmittel kann ähnlich einer Schraube wirken, eine Schraube als Druckmittel, nämlich als Druckschraube aufweisen und eine Drehung in eine axiale Kraft zum Trennen der Elemente umsetzen. Auch dieses Trennmittel ist vorzugsweise so ausgebildet, dass es mittels eines Druckluftschraubers betätigt werden kann.

Das Hubmittel kann vorzugsweise so gestaltet werden, dass das tatsächliche Anheben der Schalung mittels einer bzw. mehrerer entsprechend kräftiger Federn erfolgt und das Absenken der Schalung in ihrer Position zum Fertigen eines Betonteils dadurch erfolgt, dass eine Schrauben gegen die Federkraft wirkt, die Feder also zusammendrückt. Auch dies ist vorzugsweise zur Verwendung mit einem Druckluftscharuber wie oben erläutert vorzusehen. Die entsprechenden Federn können somit so ausgelegt werden, dass sie nur wenig kräftiger sind, als zum Heben der betreffenden Schalung notwendig wäre. Um die Schalung nun abzusenken, wird lediglich soviel Druckkraft benötigt, wie die Feder stärker als die Gewichtskraft der Schalung ist. Wiegt die Schalung also beispielsweise 10t und die Federn sind für 11t ausgelegt, brauchen diese nur mit einer zusätzlichen Kraft durch die besagten Schrauben von einer Tonne heruntergedrückt zu werden. Ohne Verwendung dieser Federn müsste stattdessen durch Schrauben eine Hubkraft zum vollständigen Heben der 10t aufgebracht werden. Besagte nötige Kräfte werden natürlich auf die Anzahl der Hubmittel verteilt.

Zudem wird ein Verfahren zum Herstellen eines Turmsegmentes eines Betonturms einer Windenergieanlage vorgeschlagen. Demnach werden die folgenden Fertigungsschritte nach und nach ausgeführt.

Zunächst wird eine Betonmasse zwischen einem Innenverschalungselement und einem Außenverschalungselement gegossen, die in dem folgenden Schritt aushärtet. Nach dem Aushärten wird das Außenverschalungselement von einem Gegenkörper wie einem weiteren Außenverschalungselement getrennt. Hierzu wird insbesondere eine bzw. mehrere Schrauben des einen Außenverschalungselementes gegen den Gegenkörper geschraubt um dadurch diese Trennung zu erreichen. Insbesondere wird hier gegen einen Adhäsionskraft zwischen dem jeweiligen Außenverschalungselement und dem frisch gegossenen und ausgehärteten Turmsegment gearbeitet.

Als nächstes wird das Außenverschalungselement mittels eines entsprechenden Hubmittels angehoben, so dass dieses nur noch auf einer an dem Außenverschalungselement angeordneten Verfahrvorrichtung lastet. Schließlich kann das so gelagerte Außenverschalungselement in waagerechter Richtung unter Verwendung der Verfahrvorrichtung abgezogen werden. Vorzugsweise erfolgt das Anheben mittels eines Hubmittels, das mit der Fahrvorrichtung fest verbunden ist, wobei das Hubmittel mittels eines Automatikschraubers, insbesondere eines Druckluftschraubers betätigt wird, um hierdurch das Anheben durchzuführen. Vorzugsweise wird beim Herstellen eines Betonsegmentes das Außenverschalungselement zunächst mittels des Hubmittels abgesenkt, in dem das Hubmittel mittels eines Automatikschraubers betätigt wird.

Insbesondere verwendet ein solches Herstellungsverfahren die oben beschriebene Schalung und/oder die oben beschriebene Fertigungsvorrichtung zum Herstellen von Turmsegmenten unter Verwendung einer solchen Schalung.

Es wird zudem ein Betonturm einer Windenergieanlage vorgeschlagen. Dieser umfasst mehrere aufeinandergesetzte Turmsegmente unterschiedlicher Größe aus Beton, die aus Stahlbeton gefertigt sind, also eine Stahlbewehrung aufweisen. Der Turm ist also aus Betonfertigteilen aufgebaut. Dabei ist die Form des Betonturms so gewählt, dass dieser eine Außenkontur aufweist, die einer e-Funktion folgt. Anschaulich gesprochen weist ein solcher Betonturm, läge er waagerecht so, dass sein Turmkopf links und seinem Turmfuß rechts ist, einen Umriss auf, dessen obere Linie einer e-Funktion in seiner allgemeinen, üblichen Form entspricht.

Insbesondere nimmt der Umfang U des Betonturms von einem Umfang $U_0$ im unteren Bereich des Betonturms - hier wird wieder von einer bestimmungsgemäß stehenden Position ausgegangen - insbesondere am Turmfuß oberhalb eines Fundaments, mit zunehmender Höhe h mit einer e-Funktion ab, nämlich gemäß der Formel:

$$U = U_0 * e^{-h*c}.$$

Die Variable c kann hier als Einstellfaktor zum Einstellen einer Streckung oder Steigung verwendet werden. Gleichzeitig wird der Einstellfaktor c zur Normierung des Exponenten verwendet, so dass der Exponent einheitenlos ist.

Durch die Verwendung dieser Außenkontur bzw. Umfangszu- bzw. Abnahme gemäß einer e-Funktion ergibt sich ein Beton-Fertigteile-Turm, der im Wesentlichen in seinem oberen Bereich schlank ausgestaltet ist und gleichzeitig einen stabilen Turmfuß schafft, wobei die Übergänge kontinuierlich sind. Der schlanke obere Teil des Turms ist insbesondere auch bei Windenergieanlagen von Bedeutung, weil der Turm für das jeweils passierende Rotorblatt einen Windschatten darstellt, der so klein wie möglich gehalten werden sollte.

Um einen solchen Betonturm mit einer Kontur gemäß einer e-Funktion aus Betonfertigteilen aufzubauen, sind diese entsprechend zu fertigen. Die Schalungen, die zum Fertigen der entsprechenden Turmsegmente verwendet werden, müssen entsprechend angepasst sein, um die besagte e-Funktion des Betonturms in seiner Gesamtheit zu gewährleisten.

Die e-Funktion kann auch durch Turmsegmente im Sinne eines Polygonzugs angenähert sein, insbesondere durch Segmente mit jeweils geradem, also nicht gekrümmtem Konturabschnitt.

Es wird zudem eine Betonturmgruppe mit wenigstens einem ersten und einem zweiten Betonturm einer Windenergieanlage vorgeschlagen. Jeder dieser Betontürme weist mehrere aufeinander gesetzte Turmsegmente unterschiedlicher Größe aus Beton auf. Ein Turmsegment oder mehrere in gleicher Höhe angeordnete Turmsegmente bilden eine Segmentebene. Im einfachsten Fall, insbesondere im oberen Bereich des Turmes, kann die Segmentebene durch ein einzelnes im Wesentlichen kegelstupfmantelförmiges Turmsegment gebildet sein. Bei größeren, insbesondere weiter unten angeordneten Segmentebenen werden diese aus mehreren wie beispielsweise zwei Halbschalen zusammengesetzt.

Die Betongruppe weist dabei wenigstens zwei unterschiedlich große Türme auf, wobei der erste Turm größer ist als der zweite Turm, nämlich mehr Segmentebenen aufweist als der zweite, wenigstens eine weitere Segmentebene aufweist als der zweite. Dabei wird vorgeschlagen, dass der erste und der zweite Turm Segmentebenen mit gleichen Turmsegmenten aber in unterschiedlichen Höhen aufweist.

Es wird somit vorgeschlagen, für unterschiedliche Betontürme gleiche Segmentebenen vorzuschlagen und damit für unterschiedliche Türme gleiche Turmsegmente zu verwenden. Insbesondere wird vorgeschlagen jeweils Betontürme zu verwenden, die eine wie oben beschriebene Außenkontur gemäß einer e-Funktion aufweisen. Bezogen auf die oben genannte Formel bedeutet dies aber, dass der Umfang $U_0$ am Turmfuß für unterschiedlich große Türme auch unterschiedlich groß ist. Vorzugsweise gleichen sich die Türme abschnittsweise in ihren oberen Bereichen. Vereinfacht ausgedrückt entspricht der größere Betonturm dem kleineren Betonturm, wobei noch einige Turmsegmente unter diesen kleineren Betonturm untergesetzt sind. Der tatsächliche Aufbau eines Betonturmes erfolgt natürlich in anderer Art und Weise, nämlich sukzessive vom Fundament aus, also vom Turmfuß aus.

Umfasst die Betonturmgruppe beispielsweise einen ersten Betonturm mit 20 Segmentebenen und einen zweiten Betonturm mit 10 Segmentebenen, wobei jeweils die erste Segmentebene die oberste Segmentbildet und die zwanzigste Segmentebene des großen Turms bzw. die zehnte Segmentebene des kleinen Turms die unterste Segmentebene bildet, wird für diese beispielhafte Konstellation vorgeschlagen, dass die erste bis zehnte Segmentebene des großen Turm und des kleinen Turms gleich groß sind. Der große Turm kann also für seine Konstruktion für die erste bis zehnte Ebene auf die Konstruktion des kleinen Turms zurückgreifen. Es können dabei einige Details gegebenenfalls unterschiedlich sein. Insbesondere dürfte die 10 Ebene des kleinen Turms eine Öffnung für eine Tür aufweisen, die in der zehnten Ebene des großen Turms nicht vorzusehen ist.

Für die Fertigung brauchen somit nur Turmsegmente für insgesamt 20 unterschiedliche Segmentebenen, statt für 30 unterschiedliche Segmentebenen hergestellt und bereitgestellt zu werden. Soll ein weiterer, mittlerer Turm ergänzt werden, der beispielsweise 15 Segmentebenen aufweist, so braucht kein Turmsegment mit neuer Größe vorgesehen zu sein. Für diese exemplarisch genannten drei unterschiedlichen Betontürme brauchen dann nur Turmsegmente für 20 unterschiedliche Turmsegmentebenen bereitgestellt zu werden, anstatt für 45 Segmentebenen.

Besonders vorteilhaft wirkt sich dies für Betontürme mit einer e-Funktion-förmigen Turmkontur aus. Hier weist der e-Funktion-förmige große Windenergieanlagenturm in seinen oberen Bereich eine e-Funktions-Form auf, die der eines kleineren Turms entspricht. Dabei bildet auch der große Turm eine e-funktionsförmige Gesamtkontur, ohne knickförmige oder anderweitig diskontinuierliche Übergänge. Die e-Funktions-Form ermöglicht den beschriebenen modularen Aufbau der Türme unterschiedlicher Größe.

Außerdem wird ein Windpark vorgeschlagen, der einen Betonturm bzw. eine Betonturmgruppe mit Betontürmen umfasst. Dabei ist unter einem Windpark eine Anordnung mehrere Windenergieanlagen zu verstehen, die jeweils einen Betonturm aufweisen und die einer gemeinsamen Gesamtsteuerung unterliegen und/oder einen gemeinsamen Anschlusspunkt zum Einspeisen elektrischer Energie in ein elektrisches Netzwerk verwenden.

Es wird zudem ein Verfahren zum Herstellen von Betontürmen von Windenergieanlagen vorgeschlagen. Demnach werden Betontürme mit mehreren aufeinander gesetzten Turmsegmenten unterschiedlicher Größe zugrunde gelegt. Das Verfahren betrifft also die Herstellung von Betontürmen aus Betonfertigteilen.

Zunächst werden Turmsegmente aus Stahlbeton in 1 bis k unterschiedlichen Größen hergestellt. k ist eine ganze, positive Zahl größer als 2, wobei für jede Größe von 1 bis k jeweils wenigstens ein Turmsegment gefertigt wird. Es können also auch für gleiche Ebenen mehrere Turmsegmente wie beispielsweise zwei Halbschalen verwendet werden.

Aus den so hergestellten Turmsegmenten werden dann mehrere Turmsegmente zum Aufbauen eines Betonturmes ausgewählt, wobei die Auswahl abhängig ist von der Größe des aufzubauenden Betonturms. Für den Aufbau eines Betonturmes einer ersten Größe wird wenigstens ein Turmsegment jeder der Größen 1 bis k verwendet. Für den Aufbau eines Betonturms einer zweiten Größe wird wenigstens ein Turmsegment jeder der Größen 1 bis j verwendet. Die Variable j ist eine ganze Zahl größer als 1 und kleiner als k. Der Betonturm der zweiten Größe ist dabei kleiner als der Betonturm der ersten Größe, und der kleinere Betonturm verwendet weniger Turmsegmente zu seinem Aufbau als der größere Betonturm. Schließlich wird der jeweilige Turm unter Verwendung der ausgewählten Turmsegmente aufgebaut.

Mit anderen Worten schlägt das Verfahren vor, beim Aufbau des Turmes die notwendigen Turmsegmente nur nach deren Größe auszuwählen und dabei für große und kleine Türme die gleichen Turmsegmente zu verwenden. Die Turmsegmente der Größen 1 bis j sind somit für den großen und den kleinen Turm vorgesehen. Der große Turm benötigt lediglich zusätzlich die Turmsegmente der Größen j+1 bis k bzw. die Größe k wenn j+1 identisch ist mit k.

Vorzugsweise sind die Turmsegmente der Größen 1 bis j zum Aufbau des zweiten kleineren Betonturms identisch mit den Turmsegmenten der Größen 1 bis j zum Aufbau des ersten, größeren Betonturms.

Es ist somit günstig, dass für den Aufbau des Betonturmes der ersten Größen die gleichen Turmsegmente verwendet werden wie für den Aufbau des Betonturmes der zweiten Größe und zusätzlich weitere Turmsegmente für den Aufbau des Betonturmes der ersten Größe verwendet werden. Dabei werden die gleichen Turmsegmente für einen oberen Turmbereich verwendet und die weiteren Turmsegmente, die bei dem kleineren nicht verwendet werden, für einen unteren Turmbereich, der entsprechend unterhalb des oberen Turmbereichs angeordnet ist.

Vorzugsweise werden Betontürme wie oben beschrieben oder Betontürme für Betongruppen wie oben beschrieben oder Betontürme für einen oben beschriebenen Windpark aufgebaut.

Zudem wird ein Turmsegment zum Aufbau eines Betonturmes einer Windenergieanlage vorgeschlagen, das zum Aufbau eines oben beschriebenen Betonturms oder einer oben beschriebenen Betonturmgruppe vorbereitet ist. Insbesondere dass das Turmsegment entsprechend an die Form des aufzubauenden Betonturms angepasst ist, um im aufgebauten Zustand des Turmes einen Teilabschnitt davon zu bilden.

Es wird ein Befestigungsanker zum Sichern eines Turmsegmentes eines aufzubauenden Betonturms einer Windenergieanlage beim Transport des Turmsegmentes auf einem Tieflader vorgeschlagen. Dieser Befestigungsanker weist einen in dem Turmsegment einzubetonierenden Verankerungsabschnitt auf. Hierüber sollen dann Zugbelastungen in das Turmsegment eingeleitet werden. Weiterhin ist ein fest mit dem Verankerungsabschnitt verbundener, länglicher, insbesondere zylindrischer Schaftbereich vorgesehen. Dieser Schaftbereich ist so zum Einbetonieren in dem Turmsegment vorbereitet, dass eine zum Verankerungsabschnitt abgewandte Verbindungsseite mit einer Außenseite des Turmsegmentes abschließt. Der Schaftbereich weist ein Innengewinde auf zum Einschrauben einer Verbindungsöse zum Befestigen eines Schäkels. Außerdem oder alternativ weist der Verankerungsbereich einen im Verhältnis zum Schaftbereich vergrößerten Abschnitt auf, um in dem Turmsegment einen festen Halt zu haben und Zugbelastungen in das Turmsegment zu übertragen.

Dieser Befestigungsanker ist dazu vorbereitet, fest in das Turmsegment insbesondere in eine Wandung des Turmsegmentes einbetoniert zu werden, wobei lediglich eine Öffnung von außen zugänglich ist, insbesondere um dort ein weiteres Befestigungsmittel einzuschrauben. So kann eine Befestigungsöse dort eingeschraubt werden und daran - beispielsweise mittels Schäkel - das Turmsegment auf einen Tieflader festverzurrt werden.

Vorzugsweise ist der Befestigungsanker aus Stahl gefertigt, um eine möglichst hohe Belastung aufnehmen zu können.

Es wird zudem ein Turmsegment zum Aufbau eines Betonturmes einer Windenergieanlage vorgeschlagen. Dieses ist gekennzeichnet durch wenigstens einen, in eine Wand des Turmsegmentes eingelassenen, oder durch die Wand hindurchgeführten Befestigungsanker, um das Turmsegment bei einem Transport auf einem Tieflader mit Hilfe des Befestigungsankers zu befestigen, insbesondere zu verzurren, wobei der Befestigungsanker ein von außen zugängliches Innengewinde aufweist, zum Einschrauben einer Verbindungsöse zum Befestigen eines Schäkels.

Ein solches Turmsegment verwendet insbesondere einen wie oben beschriebenen Befestigungsanker und kann damit vorteilhaft beim Transport auf einem Tieflader verzurrt werden. Diese Befestigungsmöglichkeit durch ein Innengewinde des Befestigungsankers ermöglicht eine gezielte Verzurrung auf einem Tieflader. Die entsprechenden Zurrgurte oder Zurrseile oder Zurrketten brauchen nur an dem Befestigungsanker und an dem Tieflader befestigt zu werden. Je nach Position des Befestigungsankers in dem Turmsegment können kurze Zurrriemen oder dergleichen verwendet werden. Der Befestigungsanker schafft zudem einen klar definierten Ansatzpunkt, der nicht verrutschen kann. Zudem kann eine beschriebene Verbindungsöse nach dem Transport einfach aus dem Turmsegment, nämlich dem Befestigungsanker herausgeschraubt werden und behindert dann den weiteren Aufbau des Betonturmes nicht. Falls gewünscht, kann die verbleibende Öffnung des Befestigungsankers an der Segmentaußenseite durch einen Blindstopfen geschlossen werden.

Vorzugsweise wird ein solcher Befestigungsanker beim Fertigen des betreffenden Betonsegmentes mit einbetoniert. Ist ein solches Einbetonieren unterblieben, kann durch eine nachträglich vorgenommene Bohrung ein an diese Bohrung angepasster Befestigungsanker teilweise durch die Segmentwand hindurchgeführt und zur Festigung und zum Verzurren beim Transport verwendet werden.

Vorteilhafterweise weist der Befestigungsanker einen länglichen, insbesondere zylindrischen Schaftbereich auf, der an einer Seite mit einem Verankerungsbereich und einer anderen Seite mit einer Öffnung zu einem Innengewinde versehen ist. Der Schaftbereich wird vorteilhafterweise so in dem Turmsegment einbetoniert, dass er mit einer Seite so mit einer Oberfläche des Turmsegmentes abschließt, dass die Verbindungsöse von außen in das Innengewinde eingeschraubt werden kann.

Um einen sicheren Halt des Befestigungsankers in dem Beton zu gewährleisten, weist dieser einen Verankerungsbereich auf, der im Verhältnis zum Schaftbereich deutlich vergrößert ist. Dieser Verankerungsbereich ist vollständig in dem Turmsegment einzubetonieren um dadurch zu Belastungen, die beim Verzurren auftreten können, in das Turmsegment zu übertragen.

Es wird zudem eine Sicherungsvorrichtung vorgeschlagen. Eine solche Sicherungsvorrichtung umfasst einen Befestigungsanker wie oben beschrieben, eine Verbindungsschraube zum Einschrauben in das Innengewinde des Befestigungsankers, wobei diese Verbindungsschraube einen Befestigungsabschnitt zum Festziehen eines Schäkels darin aufweist, wie beispielsweise eine Öse, und optional ist ein solcher Schäkel zum Befestigen an der Verbindungsschraube als Teil der Sicherungsvorrichtung vorgesehen. Hierüber kann auf einfache Weise eine sichere Verzurrung des Turmsegmentes mittels einer solchen Sicherungsvorrichtung - oder mehrerer - auf einem Tieflader vorgesehen werden.

Vorzugsweise weist die Verbindungsschraube einen Stützrand auf zum Stützen der Verbindungsschraube im eingeschraubten Zustand an bzw. gegen eine Segmentwand des Turmsegmentes. Ist der Befestigungsanker so in dem Turmsegment einbetoniert, dass lediglich eine Gewindeöffnung eines Innengewindes mit einer Oberfläche des betreffenden Turmsegmentes abschließt, so kann hierin die Verbindungsschraube mit Stützrand geschraubt werden, bis sich ihr Stützrand gegen diese Wand des Turmsegmentes presst. Hierdurch wird eine feste und kippsichere Verbindung der Verbindungsschraube mit dem Turmsegment erreicht. Das Innengewinde, in das die Schraube eingeschraubt ist, schafft eine Zugbelastung und verhindert, dass sich die Schraube aus dem Turmsegment löst. Der Stützrand verhindert dabei eine Kippbewegung der Verbindungsschraube. Dies ist insbesondere für eine Verzurrung vorteilhaft, die nicht in axialer Richtung der Verbindungsschraube bzw. des Innengewindes verläuft, sondern schräg oder sogar senkrecht dazu.

Optional ist eine Pufferscheibe zum Anordnen zwischen den Stützrand und der Segmentwand vorgesehen. Diese Pufferscheibe kann beispielsweise aus einem Kunststoffmaterial gefertigt sein, um gegebenenfalls Elastizitäten aufzunehmen und/oder um leichte Oberflächenungenauigkeiten der Segmentwand auszugleichen.

Es wird zudem ein Verfahren zum Herstellen eines Turmsegmentes vorgeschlagen. Dies betrifft ein Turmsegment zum Aufbauen eines Betonturmes einer Windenergieanlage. Zunächst wird eine Schalung zum Gießen des Turmsegmentes als Betonfertigteil vorbereitet. Dann bzw. dabei wird ein wie oben beschriebener Befestigungsanker in einer gewünschten Position angeordnet und so fixiert, dass er beim Eingießen von Beton in die Schalung seine Position beibehalten kann. Anschließend wird der Beton in die Schalung eingegossen, so dass das Turmsegment entsteht und der Befestigungsanker in der vorbestimmten Position eingegossen wird.

Somit wird insbesondere ein wie oben beschriebenes Turmsegment mit eingelassenem Befestigungsanker hergestellt.

Die beschriebenen Turmsegmente können kombiniert werden, in dem Sinne, dass Merkmale, die in einem anderen Kontext erläutert wurden, verwendet werden können, sofern dies technisch nicht widersprüchlich ist. Das Gleiche gilt für beschriebene Betontürme. Auch bei diesen können grundsätzlich alle beschriebenen Merkmale kombiniert werden, sofern dies nicht technisch widersprüchlich ist.

Beispielsweise kann ein Turmsegment, das zum Aufbau eines Betonturms mit einer e-Funktionsförmigen-Kontur vorgesehen ist, einen Befestigungsanker oder anderes Transportsicherungshilfsmittel aufweisen, wie an anderer Stelle beschrieben wurde.

Nachfolgend wird die Erfindung anhand von Beispielen unter Bezugnahme auf die begleitenden Figuren exemplarisch beschrieben.

Figur 1   zeigt eine Windenergieanlage in einer perspektivischen Ansicht.

Figur 2   zeigt eine Schalung für Turmsegment in einer perspektivischen Darstellung.

Figur 3   zeigt einen Ausschnitt einer verfahrbaren Schalung mit einem Hebelsystem und einem Teil einer Verfahrvorrichtung in einer perspektivischen Ansicht.

Figur 4   zeigt ein Detail einer verfahrbaren Schalung einschließlich eines Teils eines Hubmittels und eines Trennmittels zum Trennen zweier halbschalenförmiger Schalungen voneinander.

Figur 5   zeigt eine Sicherungsvorrichtung zum Sichern eines Turmsegmentes beim Transport in ihrer bestimmungsgemäßen Anordnung in einer teilweise geschnittenen Seitenansicht schematisch.

Figur 6   zeigt einen Befestigungsanker schematisch in einer perspektivischen Ansicht.

Figur 7   zeigt eine Verbindungsöse mit einem eingeschäkelten Schäkel in einer Draufsicht.

Figur 8   zeigt schematisch in einer Seitenansicht ein mittels zweier Sicherungsvorrichtungen befestigtes Turmsegment auf einem Tieflader.

Figur 9   zeigt zu der Darstellung der Figur 8 eine Draufsicht.

Nachfolgend werden einige Aspekte der vorliegenden Erfindung anhand von Ausführungsbeispielen exemplarisch erläutert. Nachfolgend können gleiche Bezugszeichen für ähnliche aber gegebenenfalls nicht identische Merkmale verwendet werden. Jedenfalls bezeichnen gleiche Bezugszeichen aber funktional gleiche Merkmale.

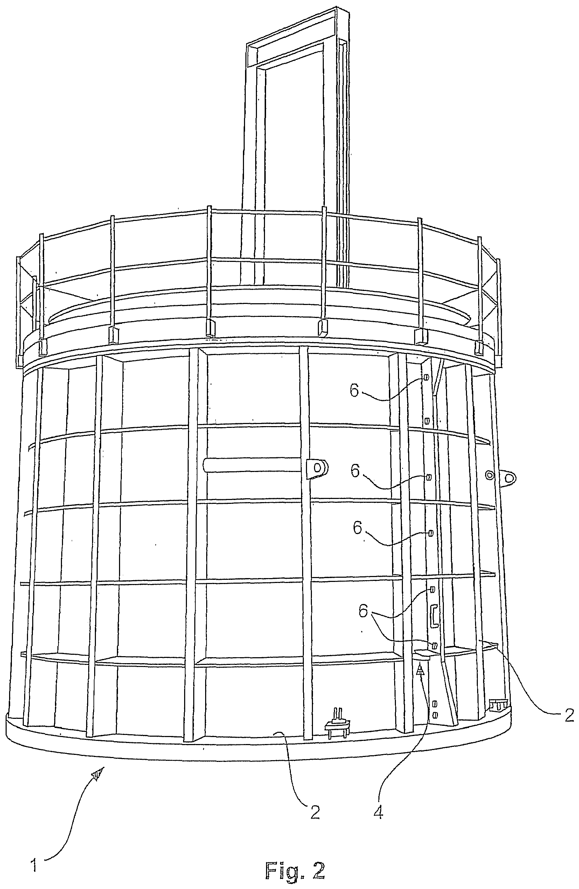

Figur 2 zeigt eine Schalung 1, die zum Fertigen eines Turmsegmentes einer etwa kegelstumpfmantelförmigen Gestalt vorbereitet ist. Alternativ könnte grundsätzlich auch beispielsweise zwei Halbschalen hergestellt werden, die zusammengesetzt eine etwa kegelstumpfmantelförmige Gestalt haben. Hierzu weist die Schalung ein Innenverschalungselement sowie zwei halbschalenförmige Außenverschalungselemente 2 auf. Die beiden Außenverschalungselemente 2 sind an zwei Kontakträndern 4 fest zusammengesetzt und ergeben zusammen einen das Turmsegment bzw. das zu fertigende Turmsegment umschließenden Kegelstumpfmantel. An den Kontakträndern 4 sind diese beiden als Halbschalen ausgebildeten Außenverschalungselemente mittels Verbindungsschrauben 6 fest miteinander verbunden. Zwischen diesen beiden so verbundenen Außenverschalungselementen 2 und einem in der Figur 2 nicht zu erkennenden Innenverschalungselement bildet sich ein Ringspalt, in den flüssiger Beton zum Herstellen eines Turmsegmentes einzufüllen ist. Figur 2 zeigt dabei einen ganz allgemeinen Aufbau einer solchen Schalung 1, die auch ohne erfindungsgemäße Merkmale verwendet werden kann.

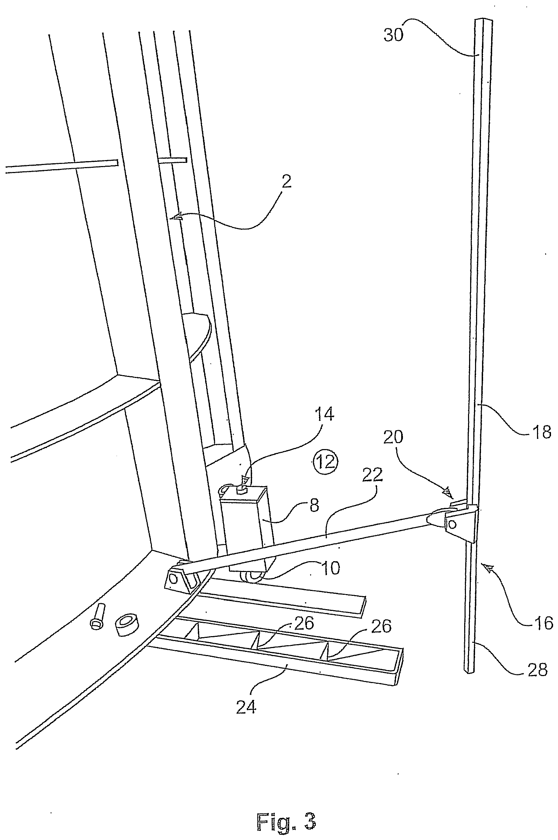

Figur 3 zeigt einen Ausschnitt eines Außenverschalungselementes 2, das mit einer Verfahrvorrichtung versehen ist. Diese Verfahrvorrichtung umfasst mehrere Rollblöcke 8, von denen einer in Figur 3 dargestellt ist. Dieser Rollblock 8 weist ein Rad 10 auf, das nach unten aus dem Rollblock herausragt und auf dem gezeigten Hallenboden 12 rollen kann, um hierdurch ein Bewegen bzw. Verfahren des Außenverschalungselementes 2 zu ermöglichen.

Das Rad 10 ist in dem Rollblock 8 beweglich gelagert und wird mittels einer Feder nach unten aus dem Rollblock 8 hinaus in die gezeigte Position gedrückt. Mittels eines Betätigungselements, nämlich einer Betätigungsschraube 14 kann das Rad 10 in den Rollblock gegen eine Federkraft der besagten Feder hineingezogen werden. Hierdurch senkt sich das Außenverschalungselement 2, das an diesen Rollblock 8 befestigt ist, ab. Die Betätigungsschraube 14 ist hinsichtlich ihrer Form, Größe und Zugänglichkeit für eine Betätigung mittels eines Pressluftschraubers angepasst. Ein Absenken oder auch Wiederanheben lässt sich somit auf einfache Weise durch einen Druckluftschrauber bzw. Pressluftschrauber bewerkstelligen. Der Rollblock 8 bildet somit ein Hubmittel, mit dem das Außenverschalungselement 2 angehoben oder abgesenkt werden kann, und das mit einem Rad 10 zum Verfahren des Außenverschalungselementes 2 kombiniert ist. Dies ist nur ein Beispiel für eine Kombination eines Hubmittels mit einem Rad oder einer Rolle.

Figur 3 zeigt zudem ein Hebelmittel 16, das im Wesentlichen aus einer Hebelstange 18 besteht. Die Hebelstange 18 ist in ihrem unteren Bereich an einem Verbindungsgelenk 20 über eine Zugstange 22 mit dem Außenverschalungselement 2 beweglich verbunden.

Weiterhin ist eine Hebelansatzschiene 24 am Hallenboden 12 angeordnet. Die Hebelansatzschiene 24 bildet eine Stützhilfe. In diese Hebelansatzpunkte 26 kann die Hebelstange 18 mit einem unten angeordneten Ansetzabschnitt 28 angesetzt werden. Durch ein Ziehen im oben an der Hebestange angeordneten Griffbereich 30 kann das Außenverschalungselement 2 zurückgezogen werden, nämlich gemäß der Darstellung der Figur 3 nach rechts, um dadurch ein ausgehärtetes Betonsegment freizugeben. Die Hebelansatzschiene 24 kann mobil ausgestaltet sein, um an verschiedenen Außenverschalungselementen 2 zum Einsatz zu kommen.

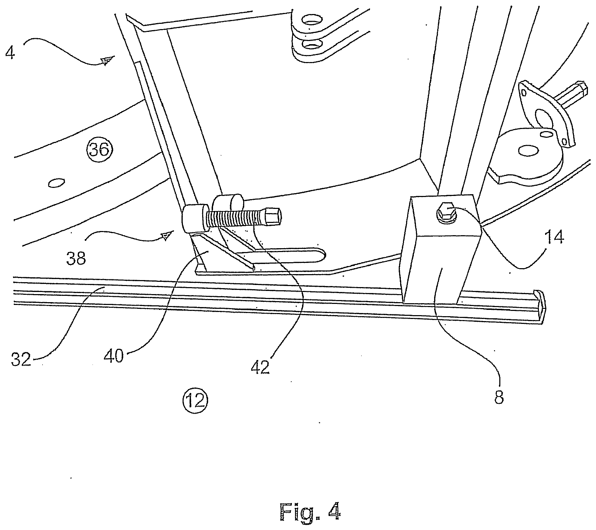

Figur 4 zeigt einen anderen Ausschnitt des Außenverschalungselementes 2 der Figur 3. In diesem Ausschnitt ist ein weiterer Rollenblock 8 mit einer weiteren Betätigungsschraube 14 zu erkennen. Auch dieser Rollenblock 8 weist ein Rad 10 auf, das aus dem Rollenblock 8 nach unten herausragt und somit das Außenverschalungselement 2 in der gezeigten Höhe über dem Hallenboden 12 trägt. Das Rad 10 ist hier aufgrund der gewählten Perspektive nicht zu erkennen. Die Figur 4 zeigt aber eine Laufschiene 32, die den Rollenblock 8 mit seinem nach unten herausragenden Rad führt. Die Laufschiene 32 kann auch als Fahrschiene bezeichnet werden.

In der Figur 4 ist noch ein Teil eines gefertigten Turmsegmentes 34 sowie ein Formboden 36, mit dem zusammen zwei Außenverschalungselemente 2 und ein Innenverschalungselement eine Betonform zum Fertigen des gezeigten Turmsegmentes bilden. Figur 4 zeigt eine geöffnete Position, in der das Außenverschalungselement 2 bereits von dem Turmsegment 34 weggezogen wurde, um das Turmsegment 34 frei zu geben.

Figur 4 zeigt zudem an dem Außenverschalungselement 2 ein Trennmittel 38, das auch als Trennelement bezeichnet werden kann. Im geschlossenen Zustand, wenn Beton in eine solche Form eingegossen werden kann bzw. darin aushärten kann, ist das Außenverschalungselement 2 gemäß Figur 4 mit einem weiteren Außenverschalungselement 2 an seinem Kontaktrand 4 verbunden, wie dies in der Figur 2 zu erkennen ist. Um ein Trennen zweier so verbundener Außenverschalungselemente 2 durchzuführen oder zu erleichtern, ist das Trennmittel 38 vorgesehen. Dieses Trennmittel 38 weist einen Befestigungs- und Führungsabschnitt 40 auf, mit dem das Trennelement an dem Außenverschalungselement 2 fest verbunden ist. An dem Befestigungs- und Führungsabschnitt 40 ist als weiteres Element des Trennmittels 38 eine Druckschraube 42 vorgesehen. Zu dieser Druckschraube 42 weist das andere, in Figur 4 nicht dargestellte Außenverschalungselement im Bereich seines Kontaktrandes einen Druckbereich auf, gegen den die Druckschraube 42 zu schrauben ist. Wird die Schraube 42 gegen diesen Druckbereich geschraubt - was gemäß Figur 4 einem Schrauben nach links entspricht - so werden dadurch die beiden Außenverschalungselemente 2 auseinandergedrückt. Auch die Druckschraube 42 ist dazu vorbereitet, mit einem Druckluft- bzw. Pressluftschrauber betätigt zu werden. Die Sechskantform des Schraubenkopfes 44 der Druckschraube 42 entspricht in seiner Größe und Art der Betätigungsschraube 14 des Rollenblocks 8. Sowohl die Betätigungsschraube 14 als auch die Druckschraube 42 lassen sich somit durch ein und dasselbe Werkzeug auf einfache Art und Weise betätigen.

Ein Außenverschalungselement wie das Außenverschalungselement 2 ist somit auf effiziente Art und Weise verschiebbar, indem Rollen oder Räder zum Verfahren vorgesehen sind und/oder Trennelemente wie das Trennelement 38 zum separieren zweier Außenverschalungselemente vorgesehen sind und/oder ein Hubmittel wie der Rollenblock 8 zum Heben und Senken des Außenverschalungselementes vorgesehen sind und/oder ein Hebemittel wie die Hebelstange 18 mit ihrer Zugstange 22 und der Hebelansatzschiene 24 vorgesehen sind.

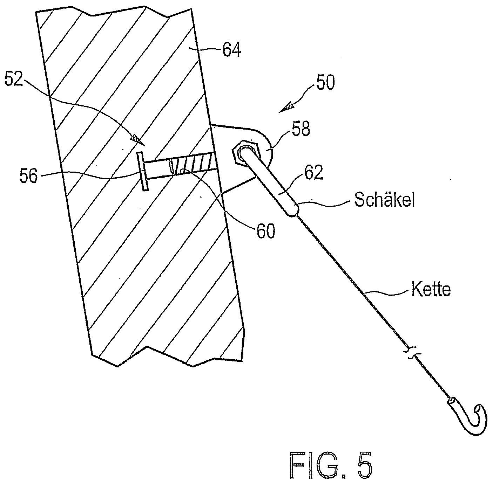

Figur 5 zeigt eine Sicherungsvorrichtung 50 zum Sichern eines Turmsegmentes beim Transport, mit einem Befestigungsanker 52 mit einem Schaftbereich 54 und einem Verankerungsbereich 56. Weiterhin umfasst die Sicherungsvorrichtung 50 eine Verbindungsöse 58, die in ein Innengewinde 60 des Schaftbereichs 54 des Befestigungsankers 52 eingeschraubt ist. An der Verbindungsöse 58 ist ein Verbindungsschäkel 62 eingeschäkelt. Figur 5 zeigt die Sicherungsvorrichtung 50 in einer teilweise geschnittenen Seitenansicht, wobei der Befestigungsanker 52 in die Wandung eines Turmsegmentes 64 eingelassen ist. Die Verbindungsöse 58 ist hierdurch zug- und kippsicher an der Wandung 64 des Turmsegmentes befestigt, und über den Schäkel 62 kann eine Verzurrung des Turmsegmentes vorgenommen werden.

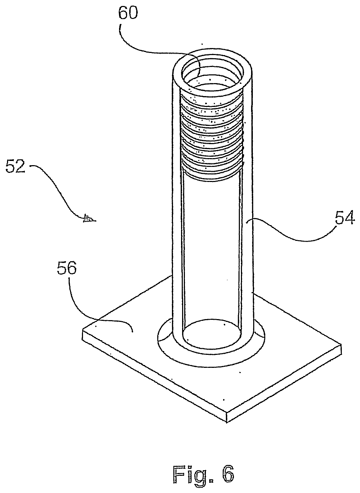

Figur 6 zeigt den Befestigungsanker 52 in einer schematischen und perspektivischen Darstellung. Der Verankerungsbereich 56 ist hier als rechteckiger Fuß ausgebildet und mit dem Schaftbereich 54 verschweißt. Der Schaftbereich 54 ist hohl ausgestaltet und weist in seinem gemäß Figur 6 oberen Abschnitt ein Innengewinde 60 auf, in das eine Verbindungsöse oder Verbindungsschraube eingeschraubt werden kann. Nach einem durchgeführten Transport kann eine etwaige Verzurrung gelöst und die Verbindungsöse aus dem Befestigungsanker 52 herausgeschraubt werden. Um ein Eindringen von Feuchtigkeit oder anderer Fremdstoffe zu vermeiden, kann dann ein Blindstopfen in das Innengewinde 60 eingeschraubt oder anderweitig in den Schaftbereich 54 im Bereich des Innengewindes 60 eingesetzt werden. Vorzugsweise ist ein solcher Blindstopfen aus Kunststoff, insbesondere als Kunststoffspritzgussteil hergestellt.

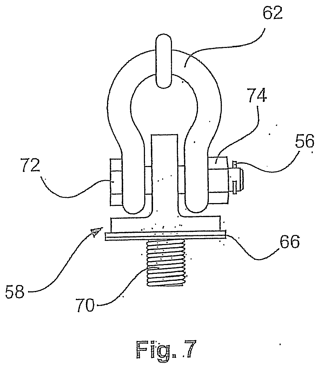

Figur 7 zeigt in einer Draufsicht und einer vergrößerten Darstellung die Verbindungsöse 58 mit Pufferscheibe 66 und eingeschäkeltem Verbindungsschäkel 62. Die Verbindungsöse 58, die allgemein auch als Verbindungsschraube bezeichnet werden kann, weist einen Schraubenabschnitt 70 auf zum Einschrauben in das Innengewinde 60 des Befestigungsankers 52. Der Schäkel 62 ist mittels einer Befestigungsschraube 72 an der Verbindungsöse 58 befestigt und mittels Mutter 74 und Sicherungsstift 76 befestigt und gesichert. Grundsätzlich kann auch der Schäkel 62 als Teil einer Verzurreinrichtung, z.B. als Teil von Zurrketten oder Zurrriemen vorgesehen sein, um dann zum Vorbereiten eines Verzurrens mittels der Befestigungsschraube 72 an der Verbindungsöse 58 befestigt zu werden.

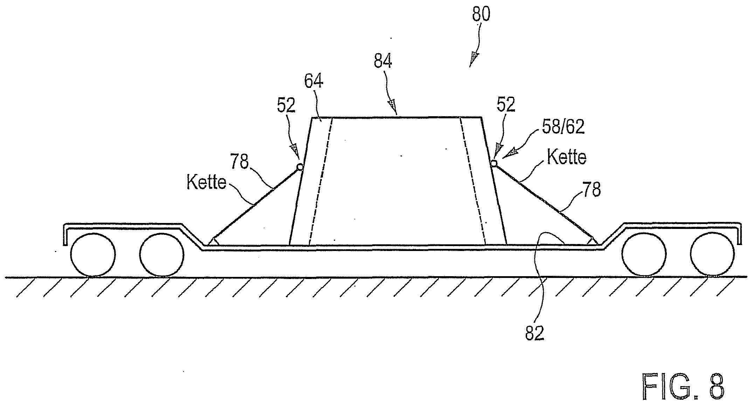

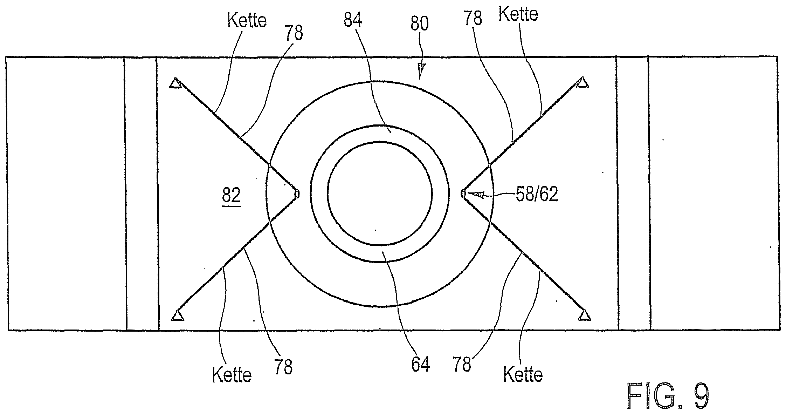

Figuren 8 und 9 zeigen schematisch ein mittels Zurrketten 78 verzurrtes Turmsegment 80. Hierbei ist ein Befestigungsanker 52 in die Turmwandung 64 des Turmsegmentes 80 eingelassen. Über jeweils eine Verbindungsöse 58 und einen Verbindungsschäkel 62 sind die Verzurrketten 78 mit dem Turmsegment 80 verbunden und gleichzeitig mit der Auflage 82 verbunden. Die Auflage 82 ist nur schematisch dargestellt und kann beispielsweise eine Auflagefläche eines Tiefladers darstellen.

Somit ergibt sich eine einfache und effiziente Befestigungs- insbesondere Verzurrmöglichkeit für das Turmsegment 80 beim Transport. Eine Verzurrung, bei der ein Zurrriemen über den oberen Rand 84 des Turmsegmentes 80 gelegt würde, birgt eine hohe Gefahr des Verrutschens, was durch die gezeigte Lösung vermieden werden kann. Bei dieser Lösung wird auf einfache Art und Weise der Befestigungsanker 52 beim Herstellen des Turmsegmentes 80, also beim Gießen desselben eingearbeitet. Auch das kann auf einfache Art und Weise geschehen, indem der Befestigungsanker 52 beim Gießen des Betonturmsegmentes 80 an der gewünschten Position in der betreffenden Betonform bzw. Betonschalung fest angeordnet wird.

**Patentansprüche**

1. Verfahren zum Fertigen eines Turmsegmentes (34) eines Betonturms einer Windenergieanlage als Betonfertigteil, umfassend die Schritte:

   - Bereitstellen einer, wenigstens eine Schalung (2) aufweisenden Segmentform zur Vorgabe einer Form des zu fertigenden Turmsegmentes und zum Befüllen mit Beton,
   - Befüllen der Segmentform mit Beton, so dass bei einem anschließenden Aushärten des Betons das Turmsegment (34) entsteht, und **gekennzeichnet durch** die Schritte:

      - Vermessen des so ausgehärteten Turmsegmentes (34) zum Erstellen eines dreidimensionalen, virtuellen Ist-Modells dieses Turmsegmentes (34),

      - Anfertigen dieses dreidimensionalen Ist-Modells,
      - Vergleichen des dreidimensionalen Ist-Modells mit einer vorgegebenen Form, insbesondere mit einem hinterlegten dreidimensionalen, virtuellen Soll-Modell und Bestimmen einer Abweichung zwischen den beiden virtuellen Modellen und
      - Verändern der Segmentform, insbesondere der wenigstens einen Schalung (2) wenn die Abweichung einen ersten vorbestimmten Grenzwert überschreitet.

2. Verfahren nach Anspruch 1, **dadurch gekennzeichnet, dass** zum Vermessen des Turmsegmentes (34) ein Lasermessgerät verwendet wird.

3. Verfahren nach Anspruch 1 oder 2, **dadurch gekennzeichnet, dass** die Vermessung des Turmsegmentes (34) mit einer Genauigkeit von 5 mm oder höher, insbesondere 2 mm oder höher und weiter bevorzugt mit 1 mm oder höher erfolgt und/oder, der erste vorbestimmte Grenzwert 10 mm oder weniger, insbesondere 5 mm oder weniger und weiter bevorzugt 2 mm oder weniger beträgt.

4. Verfahren nach einem der vorstehenden Ansprüche, **dadurch gekennzeichnet, dass** als erster vorbestimmter Grenzwert eine maximale Abweichung eines horizontalen Schnitts des Ist-Modells, bezogen auf die bestimmungsgemäße Ausrichtung des Turmsegmentes (34), von einem Kreis bzw. Kreissegment vorgegeben wird.

5. Verfahren nach einem der vorstehenden Ansprüche, **dadurch gekennzeichnet, dass** das hergestellte und vermessene Turmsegment (34) als Ausschuss behandelt wird, wenn die Abweichung zwischen virtuellem Ist-Modell und der vorgegebenen Form einen zweiten vorbestimmten Grenzwert überschreitet, wobei der zweite vorbestimmte Grenzwert größer ist als der erste vorbestimmte Grenzwert.

6. Verfahren nach einem der vorstehenden Ansprüche, wobei abhängig von der bestimmten Abweichung ein Korrekturwert zur Änderung der Segmentform bzw. zur Änderung wenigstens einer die Segmentform bildenden Schalungen (2) berechnet wird.

**Claims**

1. A process for the production of a pylon segment (34) of a concrete pylon of a wind power installation as precast concrete parts including the steps:

   - providing a segment mould (2) having at least one shuttering for predetermining a shape of the pylon segment (34) to be produced and for filling with concrete,
   - filling the segment mould with concrete so that upon subsequent hardening of the concrete the pylon segment (34) is formed,
   - measuring the pylon segment hardened in that way for the production of a three-dimensional virtual actual model of said pylon segment (34), and **characterized by** the steps
   - producing said three-dimensional actual model,
   - comparing the three-dimensional actual model to a predetermined form, in particular to a stored three-dimensional virtual reference model and determining a deviation between the two virtual models, and

- modifying the segment mould (2), in particular the at least one shuttering, if the deviation exceeds a first predetermined limit value.

2. A process according to claim 1 **characterised in that** a laser measuring device is used for measuring the pylon segment (34).

3. A process according to claim 1 or claim 2 **characterised in that** measurement of the pylon segment (34) is effected with an accuracy of 5 mm or higher, in particular 2 mm or higher and further preferably 1 mm or higher, and/or the first predetermined limit value is 10 mm or less, in particular 5 mm or less and further preferably 2 mm or less.

4. A process according to one of the preceding claims **characterised in that** a maximum deviation of a horizontal section of the actual model, in relation to the appropriate orientation of the pylon segment (34), from a circle or segment of a circle, is preset as the first predetermined limit value.

5. A process according to one of the preceding claims **characterised in that** the produced and measured pylon segment (34) is treated as reject if the deviation between the virtual actual model and the predetermined form exceeds a second predetermined limit value, wherein the second predetermined limit value is greater than the first predetermined limit value.

6. A process according to one of the preceding claims wherein in dependence on the given deviation, a correction value is calculated for alteration to the segment mould or for alteration to at least one shuttering forming the segment mould (2).

**Revendications**

1. Procédé servant à produire un segment de tour (34) d'une tour en béton d'une éolienne en tant que pièce préfabriquée en béton, comprenant les étapes consistant à :

    - fournir une forme de segment présentant au moins une coque (2) servant à spécifier une forme du segment de tour à produire et destinée à être remplie de béton ;
    - remplir la forme de segment de béton de manière à former le segment de tour (34) lors d'un durcissement qui suit du béton ;

    et **caractérisé par** les étapes consistant à :

    - mesurer le segment de tour (34) ainsi durci afin de créer un modèle réel virtuel tridimensionnel dudit segment de tour (34),
    - confectionner le modèle réel tridimensionnel,
    - comparer le modèle réel tridimensionnel à une forme spécifiée, en particulier à un modèle de consigne virtuel tridimensionnel enregistré et définir une divergence entre les deux modèles virtuels ; et
    - modifier la forme de segment, en particulier l'au moins une coque (2) quand la divergence dépasse une valeur limite prédéfinie.

2. Procédé selon la revendication 1, **caractérisé en ce qu'**un appareil de mesure par laser est utilisé afin de mesurer le segment de tour (34).

3. Procédé selon la revendication 1 ou 2, **caractérisé en ce que** la mesure du segment de tour (34) est effectuée avec une précision de 5 mm ou plus, en particulier de 2 mm ou plus et de manière davantage préférée de 1 mm ou plus, et/ou la première valeur limite prédéfinie est égale ou inférieure à 10 mm, en particulier égale ou inférieure à 5 mm et de manière davantage préférée égale ou inférieure à 2 mm.

4. Procédé selon l'une quelconque des revendications précédentes, **caractérisé en ce qu'**une divergence maximale d'une coupe horizontale du modèle réel, par rapport à l'orientation conforme à l'usage prévu du segment de tour (34), d'un cercle ou d'un segment de cercle est spécifiée en tant que première valeur limite prédéfinie.

5. Procédé selon l'une quelconque des revendications précédentes, **caractérisé en ce que** le segment de tour (34) fabriqué et mesuré est traité en tant que rebut quand la divergence entre le modèle réel virtuel et la forme spécifiée dépasse une deuxième valeur limite prédéfinie, dans lequel la deuxième valeur limite prédéfinie est supérieure à la première valeur limite prédéfinie.

6. Procédé selon l'une quelconque des revendications précédentes, dans lequel une valeur de correction servant à modifier la forme de segment ou servant à modifier au moins une coque (2) formant la forme de segment est calculée en fonction de la divergence définie.

Gondel

Nabe/Spinner

Windenergieanlage

Rotorblatt

Turm

Fig. 1

Fig. 2

Fig. 3

Fig. 4

FIG. 5

Fig. 6

Fig. 7

EP 2 723 544 B1

FIG. 8

FIG. 9

Kette
78
58/62
80
84
64
78
Kette
78
Kette
82
78
Kette

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10240708 A1

**In der Beschreibung aufgeführte Nicht-Patentliteratur**

- **RAUNO HEIKKILA et al.** Dreidimensionales Mess- und Prüfsystem für die Produktion architektonischer Betonfertigteile. Three-dimensional control system for precast architectural concrete production. *BFT International, Bauverlag Gütersloh, DE,* 01. Oktober 1994, vol. 60 (10), ISSN 0373-4331, 62, , 67